# EUROPEAN PATENT APPLICATION

(11) **EP 0 936 795 A2**
(43) Date of publication of application: **18.08.1999**
(21) Application number: 99200239.4
(22) Date of filing: 28.01.1999
(51) Int. Cl.: H04M 3/56, H04Q 7/22

(54) **System and method for bridging wireless and wireline subscribers**

(30) Priority: 10.02.1998 US 21441
(71) Applicant: NORTEL NETWORKS CORPORATION, Montreal, Quebec H2Y 3Y4 (CA)
(72) Inventor: Gentry, William D., Cary, North Carolina 27513 (US)
(74) Representative: Humphrey-Evans, Edward John

(57) **Abstract**

A system and method for bridging a group of wireless and wireline subscribers when originating or terminating calls allows one or more members of the group to participate in a conference call. When originating or terminating a call, the system alerts each wireless and wireline subscriber group member of the call and allows each member to choose whether to participate in the call. The system then establishes a conference call between the participating members.

## Description

### Background of the Invention

The present invention relates generally to communication networks, and more particularly to a system and method for bridging a group of wireless and wireline subscribers when originating or terminating calls.

The market for cellular and personal communications services (PCS) is rapidly expanding. As a growing number of subscribers discover the convenience of these services, the demand for each of these services will undoubtedly continue to rise. Recent deregulation in the local telephone market allows service providers to offer both wireline and wireless communications services to business and residential subscribers. One type of communication service currently offered is call conferencing. Typically, wireline call conferencing services allow multiple subscribers to participate in the same call. For example, subscriber A can call subscriber B and then conference subscribers C, D, and E into the call, allowing subscribers A-E to participate in the call. This type of call conferencing, however, is limited in that the person originating the call must manually dial the telephone numbers of the participants.

With the popularity of call conferencing growing, service providers need a system that allows multiple wireline and wireless subscribers to choose whether to participate in a conference call, creating a more flexible service and shifting the burden away from the conference call originator. Certainly, business subscribers will demand this type of integrated conference calling service from service providers in view of the advancements in video conferencing technology. In addition, Intemet usage has also gained in popularity and may be the preferred media for supporting conference calls between both business and residential subscribers. For example, User A may wish to establish an Internet conference call with family members to discuss planning a family reunion. One or more of the family members may be available only through a wireless communications channel (e.g., PCS). In addition, other family members may wish to participate in the conference call after its initiated. Ideally, User A should have the capability of dialing one telephone number to alert all of the family members about the conference call wherein each family member has the option of participating immediately or joining in at a later time. Existing systems simply do not offer this conferencing capability.

Therefore, it is desirable to provide a system that supports multiple wireline and wireless subscribers with call conferencing services in an integrated communications architecture.

It is further desirable to provide a system that allows a user to dial a single telephone number to alert a predefined group of users of an existing telephone call and permits each user to participate immediately or at a later time.

It is also desirable to provide a system that bridges an existing call to wireline and wireless subscribers responding to an initial alert signal.

Additional desires, features and advantages of the invention are set forth in the following description, apparent from the description, or may be learned by practicing the invention.

### Summary of the Invention

Systems and methods consistent with the present invention meet these desires by allowing a group of multiple wireless and wireline subscribers to participate in an originating or terminating conference call.

Specifically, a system for bridging wireline and wireless subscribers comprises means for alerting a plurality of wireline and wireless subscribers of a call; means for responding to the alert; and means for routing the call to at least one of the plurality of wireline and wireless subscribers responding to the alert.

A method for bridging wireline and wireless subscribers comprising the steps of alerting a plurality of wireline and wireless subscribers of a call; responding to the alert; and routing the communications event to at least one of the plurality of wireline and wireless subscribers responding to the alert.

Both the foregoing general description and the following detailed description are exemplary and explanatory and are intended to provide further explanation of the invention as claimed.

### Brief Description of the Drawings

The accompanying drawings, which are incorporated in and constitute a part of the specification, illustrate presently preferred embodiments of the invention and, together with the preceding general description and the following detailed description, explain the principles of the invention.

In the drawings:
Fig. 1 illustrates a system for bridging wireless and wireline subscribers consistent with the present invention;
Fig. 2a illustrates a call flow diagram for alerting wireless and wireline subscribers of a conference call consistent with the present invention;
Fig. 2b illustrates a call flow diagram for wireless and wireline subscribers answering a conference call consistent with the present invention;
Fig. 2c illustrates a call flow diagram for bridging wireless and wireline subscribers consistent with the present invention;
Fig. 2d illustrates a call flow diagram for originating a conference call from a group terminal consistent with the present invention; and
Fig. 3 shows a method for bridging wireless and wireline subscribers consistent with the present invention.

### Detailed Description of the Invention

Reference will now be made in detail to the construction and operation of preferred embodiments consistent with the present invention illustrated in the accompanying drawings. In those drawings, like elements and operations are designated with the same reference numbers.

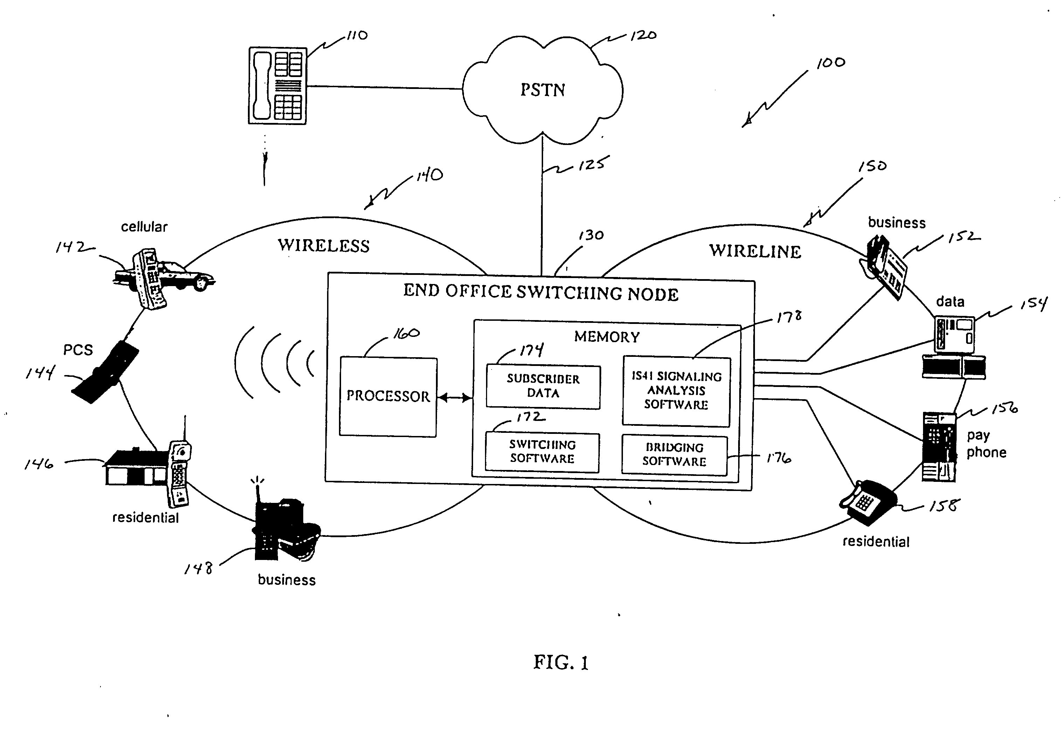

Fig. 1 illustrates a system 100 for bridging wireless and wireline subscribers consistent with the present invention. System 100 is a network system that facilitates communication between multiple wireless and wireline subscribers and enables these subscribers to participate in a conference call. To provide these features, system 100 includes a source terminal 110, a public switch telephone network (PSTN) 120, and an end office switching node 130 connected to the PSTN.

Source terminal 110 includes any communications device that supports voice or data transfer. Preferably, source terminal 110 is a telephone connected to the PSTN as shown in Fig. 1. Alternatively, source terminal 110 can be a mobile communications device (e.g., a PCS device). In addition, source terminal 110 can be a computer configured to transfer voice, data and video signals. The user selects which source terminal to use when calling one or more desired parties over system 100.

When the user dials the telephone number of the party, PSTN 120 routes the telephone call over a network of switching nodes and trunks. Switching nodes typically select where to send the call based on the dialed number. Trunks connect the switching nodes and carry the call to its selected destination. As illustrated in Fig. 1, trunk 125 connects PSTN 120 to end office switching node 130.

End office switching node 130 services multiple wireless subscribers 140 (e.g., AMPS, TDMA, CDMA, GSM, etc.) and wireline subscribers 150 (e.g., CLASS, Centrex, BRI, etc.). For example, when a wireless subscriber makes a call, switching node 130 receives the dialed telephone number and routes the call to the intended destination. Wireless subscribers 140 communicate with switching node 130 through a wireless communications channel while wireline subscribers 150 communicate with switching node 130 through a hard-wired connection. Switching node 130 further supports specialized services offered to the wireless and wireline subscribers. These services may include Call Waiting, Call Forwarding and Caller ID. Preferably, switching node 130 is a DMS-100 System manufactured by Northern Telecom which provides a central provisioning point for wireless and wireline subscribers and supports the above calling services.

To communicate with switching node 130, wireless subscribers 140 may use any wireless communications device that supports voice and data transmission. As illustrated in Fig. 1, these devices may include a cellular telephone 142, PCS device 144, fixed wireless residential telephone 146, or fixed wireless business telephone 148. Typically, these communications devices establish a connection with switching node 130 when the user dials a telephone number and hits the "SEND" key (e.g., for cellular telephone 142 or PCS 144), or simply goes off-hook by activating the handset (e.g., for the fixed wireless residential telephone 146 or fixed wireless business telephone 148).

Wireline subscribers 150 may use any wireline communications device to communicate with switching node 130. Preferably, the wireline communications device supports voice transmission but may support data transmission as well. As illustrated in Fig. 1, the wireline communications device may be a business telephone 152, computer 154, pay phone 156, or residential telephone 158. To connect with switching node 130, wireline subscribers 150 simply need to go off-hook (e.g., by lifting the handset of the telephone). The audible dial-tone received by the telephone indicates that the switch is waiting to receive a telephone number from the wireline subscriber. Alternatively, wireline subscribers 150 can be required to enter a code into the wireline communications device to connect with switching node 130.

In order to service wireless subscribers 140 and wireline subscribers 150, switching node 130 includes a processor 160, memory 170, and other components that are not described herein for the sake of simplicity. The other components can include peripheral modules that facilitate switching node operation and functionality. These peripheral modules, as well as other switching node 130 components, do not have to be co-located at switching node 130. Any of these components can be distributed throughout system 100 and configured to communicate with components located at switching node 130.

Processor 160 is a high-speed processing device that is capable of supporting switching operations and information transfer common to a typical switching node.

Switching node 130 may include multiple processors 160 to enable effective switching node operation. Processor 160 executes software stored in memory 170 in order to control switching node operation. That is, processor 160 executes the necessary software to route calls to and from wireless or wireline subscribers over PSTN 120 and provide customized calling services.

Memory 170 is any memory (e.g., an EEPROM) capable of storing large volumes of data and software for execution by processor 160. Memory 170 preferably is writable and has high-speed accessibility allowing quick access to stored data (e.g., subscriber information). Memory 170 includes switching software 172, subscriber data 174, bridging software 176, and IS41 signaling analysis software 178.

Switching software 172 includes executable code used by processor 160 to control switching operations at switching node 130. Since switching node 130 may receive thousands of routing requests within a short period, switching software 172 and processor 160 should be capable of accurately and effectively handling each of these routing requests from subscribers.

Subscriber data 174 is a database of information relating to wireless subscribers 140 and wireline subscribers 150 serviced by switching node 130. The database of information may include the subscriber's personal information (e.g., address, phone number, etc) and service profile customized for each subscriber. The service profile includes calling services (e.g., Call Conferencing) associated with each customer. For wireless subscribers, subscriber data 174 also includes a home location register (HLR) which provides mobility information (for call delivery) and mobile service profiles (authentication, SMS, etc.). Although subscriber data 174 is shown at switching node 130 in Fig. 1, it can be remotely located and accessed by the node. For example, when a wireline subscriber goes off-hook to make a call, switching node 130 can associate subscriber data 174 with the call.

Bridging software 176 provides executable code used by processor 160 for supporting call conferencing consistent with the present invention. When executed by processor 160, bridging software 176 allows switching node 130 to bridge wireless subscribers 140 and wireline subscribers 150 into a conference call. To accomplish this function, bridging software 176 associates each wireless and wireline subscriber with an existing telephone call received at switching node 130 and enables processor 160 to route the call to the associated subscribers over wireless and wireline communication channels, respectively. The association can be based on specific telephone numbers provided by the caller (e.g., the caller manually entering telephone numbers of the conference call participants) or a predetermined group of wireless and wireline subscribers that share the telephone number identified by the incoming call.

Preferably, bridging software 176 provides call conferencing for a predetermined group of wireless and wireline subscribers that share a single directory telephone number. That is, the single telephone number represents a group of subscribers that may collectively receive a telephone call from a source terminal or dial out to a destination terminal. Switching node 130 includes this call conferencing feature in each group subscriber's service profile along with the single directory telephone number of the group. Thus, when switching node 130 receives an incoming call identifying the group directory telephone number, bridging software 176 identifies each subscriber associated with the directory telephone number and, using information included in the subscriber's service profile, routes the incoming call to each subscriber over appropriate communication channels available to switching node 130 to establish a conference call. The subscriber's service profile provides bridging software 176 with the appropriate routing information to facilitate this conference calling operation. A conventional conference circuit may be used along with bridging software 176 to facilitate the conference call connection between participants. This conference circuit can be located at switching node 130 or a remote location.

IS41 signaling analysis software 178 allows switching node 130 to communicate with remote communication devices (e.g., network switches and components) using IS41 communication protocol. To facilitate this operation, IS41 signaling analysis software 178 formats messages transferred between switching node 130 and one or more remote communication devices. Although system 100 uses IS41 communication protocol as described herein, other communication protocols may be also used to provide effective network messaging over the system.

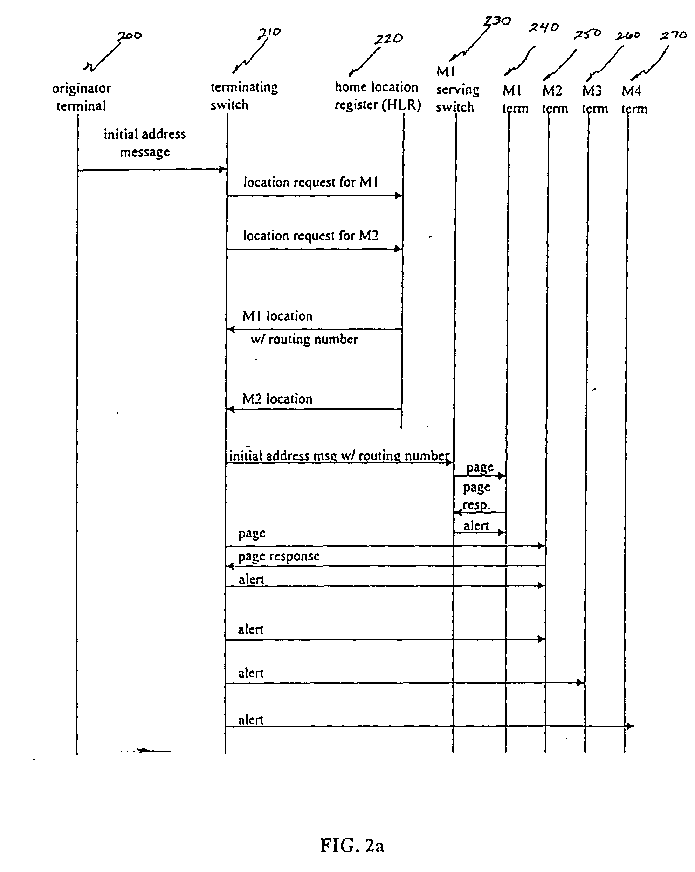

Switching node 130 associates a directory telephone number with a group of subscribers when terminating and originating calls. When terminating a call, switching node 130 receives and routes the incoming call to each available member of the group to establish a conference call. When one of the group members originate a call, switching node 130 conferences one or more of the other members into the call using bridging software 176, regardless of their location (e.g., in the same building or on a remote beach in Aruba). Implementation of these call conferencing functions are described below with respect to Figs. 2a-2d.

Fig. 2a illustrates a call flow diagram for alerting wireless and wireline subscribers of a conference call consistent with the present invention. As illustrated in Fig. 2a, call flow takes place between an originator terminal 200, terminating switch 210 (e.g., end office switching node 130), home location register (HLR) 220 (included in subscriber data 174), M1 serving switch 230, M1 terminal 240, M2 terminal 250, M3 terminal 260, and M4 terminal 270.

Originator terminal 200 is a terminal (e.g., source terminal 110) connected to a network that initiates a telephone call by sending a dialed telephone number, associated with one or more parties, to a switching node connected to the network. Terminating switch 210 is a switching node that serves as a gateway for wireline and wireless subscribers associated with the dialed telephone number. HLR 220 may be installed at terminating switch 210 or another node for locating wireless subscribers associated with the dialed telephone number. M1 serving switch 230 is any switching node servicing wireless subscribers that roam out of their home service area (i.e., the area covered by terminating switch 210). M1 terminal 240 identifies a wireless subscriber currently serviced by M1 serving switch 230. M2 terminal 250 identifies a wireless subscriber registered with terminating switch 210. M3 terminal 260 and M4 terminal 270 identify wireline subscribers serviced by terminating switch 210. Collectively, the terminals identify a group associated with the telephone number dialed by the originator. The group in this example includes two wireless subscribers and two wireline subscribers. However, the number of subscribers in a group can vary as well as the number of wireless and wireline subscribers.

As shown by the call flow diagram of Fig. 2a, originator 200 places a call to a shared directory number (e.g., using an initial address message 1-800-555-5555). If originator 200 is not served by the same network node that serves the shared directory number, then the call will route through PSTN 120, shown in Fig. 1, to terminating switch 210. When the call arrives, terminating switch 210 checks subscriber data 174, shown in Fig. 1, to determine how many members belong to the group associated with the shared directory number, and whether or not the group members are wireline or wireless. Subsequently, terminating switch 210 queries HLR 220 to determine the current location of every wireless member in the group (i.e., M1 terminal 240 and M2 terminal 250).

Once located, HLR 220 signals terminating switch 210 with the location of and a routing number for M1 terminal 240. HLR 220 also sends the location of M2 terminal 250 to terminating switch 210, but without a routing number since M2 terminal 250 is already registered with terminating switch 210. After receiving the location of the wireless subscribers, terminating switch 210 sends an initial address message with a routing number to M1 serving switch 230. This message informs M1 serving switch 230 that an incoming call is present for M1 terminal 240. Upon receiving the message, M1 serving switch 230 sends a page signal to M1 terminal 240 indicating the presence of an incoming call (e.g., using visual or audio indicators). M1 terminal 240 then sends a page response signal to M1 serving switch 230 to indicate that it is ready to receive the incoming call. Subsequently, M1 serving switch 230 sends an alert signal to M1 terminal 240 identifying the incoming call (e.g., by displaying the name or telephone number of the originator). Terminating switch 210 directly pages wireless M2 terminal 250 and alerts the terminal of the incoming call upon receiving a page response. Finally, terminating switch 210 sends alert signals to wireline M3 terminal 260 and M4 terminal 270 identifying the incoming call. At this point, any of the wireless and wireline terminals can answer the call in response to the alerting sequence.

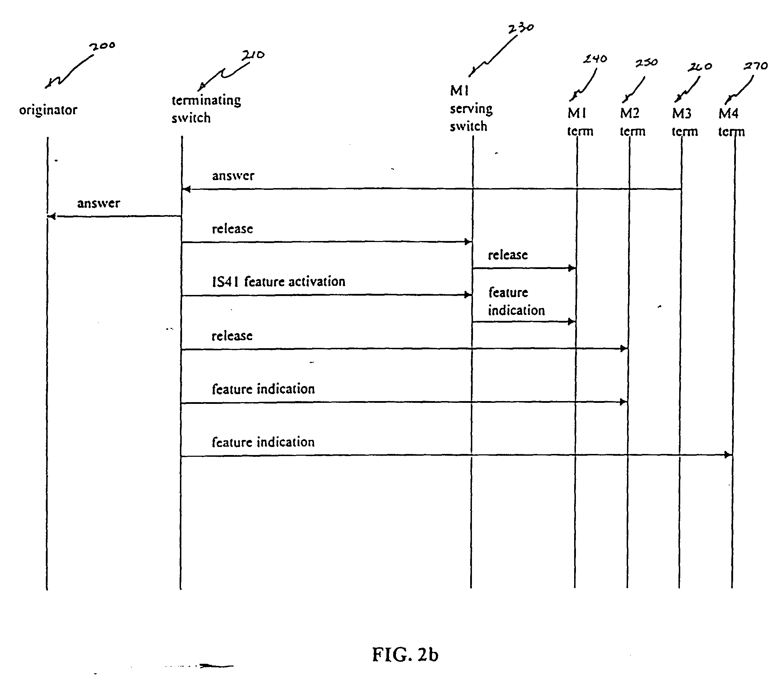

Fig. 2b illustrates a call flow diagram for wireless and wireline subscribers answering a conference call consistent with the present invention. As shown in the figure, wireline M3 terminal 260 is the first to answer the alert signal. In this instance, M3 terminal 260 sends an answer message to terminating switch 210 which establishes a connection with originator terminal 200. Upon receiving an answer message from the first party who answers the call (i.e., M3 terminal 260), terminating switch 210 stops sending alert signals to all of the other members of the group. Terminating switch 210 then notifies each non-active member that a stable call is in progress. At this time, the non-active members (i.e., M1 terminal 240, M2 terminal 250, and M4 terminal 270) can choose to bridge into the call.

Preferably, wireline members of the group receive a visual or audible indication, such as a blinking lamp or beeping sound, that the call is in progress and they can participate at any time. Wireless members of the group may receive a visual or audible indication, such as an LED indication, text message or beeping sound, that the call is in progress as long as the protocol for the radio interface (e.g., CDMA, TDMA, GSM, AMPS, etc.) supports this indication. Terminating switch 210 sends this indication to the wireline subscribers in the form of a feature indication message. Terminating switch 210 releases wireless members from the initial call, but sends a feature activation message so that each serving switch of each mobile member knows that the member can bridge into an existing call. The serving switch can respond by sending a feature indication message to the wireless terminal if the connected radio interface allows (e.g., a short message service (SMS) indication for CDMA). With respect to M1 terminal 240, terminating switch 210 sends a feature activation message to M1 serving switch 230 which directly notifies M1 terminal 240 wireless subscriber via a feature indication message that they can bridge into the call. For wireless M2 terminal 250, the release and feature indication messages are sent directly from terminating switch 210. Feature activation messages as well as other messages sent between terminating switch 210 and wireless terminals M1 and M2 are preferably developed using IS41 standard communication protocol; however, other commercially available communication protocols may be also be employed.

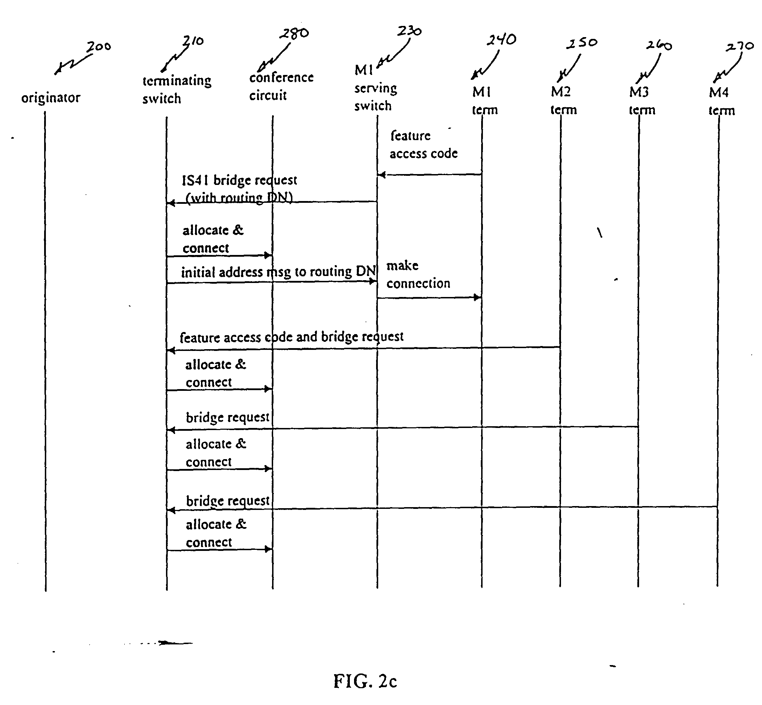

Fig. 2c illustrates a call flow diagram for bridging wireless and wireline subscribers consistent with the present invention. Wireless M1 terminal 240 can bridge into the conference call by dialing a predetermined bridging feature access code (e.g., #97). When this is done, M1 serving switch 230 sends an IS41 message (called a bridge request message) to terminating switch 210. This message includes a temporary location directory number (TLDN) which can be used to establish a network connection between terminating switch 210 and M1 serving switch 230, which currently serves roaming M1 terminal 240. When terminating switch 210 receives the IS41 bridge request message, it allocates a conventional conference circuit 280, and establishes a new conferencing leg to the bridging party (i.e., M1 terminal 240). Terminating switch 210 uses the TLDN to route the network connection back to M1 terminal 240 through M1 serving switch 230. Terminating switch 210 uses the TLDN only when the requesting mobile terminal is served by another switch.

Other members of the group can be bridged in a similar fashion. If a wireless member served by terminating switch 210 attempts to bridge into the call, terminating switch 210 allocates conference circuit 280 and establishes an immediate connection without the need for IS41 messaging. Likewise, if a wireline member attempts to bridge into the call, terminating switch 210 immediately connects the wireline member to a conference circuit 280. Whenever a bridged member chooses to leave the conference call, they can simply hang-up. In this instance, terminating switch 210 receives a release message from the member terminal and their connection to the conference circuit is released. Upon being released, a bridged member can establish another call by going off-hook and following regular dialing procedures.

The shared directory-number group can be configured with optional features, including the ability to deny bridging by default or by any member of the group, implement a specific function (e.g., tone, announcement, text update) whenever a member bridges into the call, implement a specific function (e.g., tone, announcement, text update) whenever a member is denied bridging, and limit the number of parties that can bridge into a specific call.

Each shared directory-number group is assigned a default privacy status. If the status is "private," then other group members are not allowed to bridge into the call. If the status is "public," then other group members are allowed to bridge into the call. The default privacy status can be toggled on a per-call basis by dialing a feature access code or executing a privacy-toggle feature activator associated with the switch.

Whenever the final party releases from the call, terminating switch 210 notifies each non-active member that the call is over. Wireline members receive a feature indication message that activates an output signal on the wireline device indicating that the conference call is ending. Wireless members served by other switching nodes receive a feature activation message so that the serving switch can notify the wireless terminals (via a feature indication message as permitted by the radio interface) that the call is over. If an attempt is made to bridge into a call that doesn't exist (such as dialing the feature access code when a call isn't in progress), the terminating switch will respond to the serving switch with a feature rejection message, and the member who is attempting to bridge will be sent a pre-defined feature not allowed message.

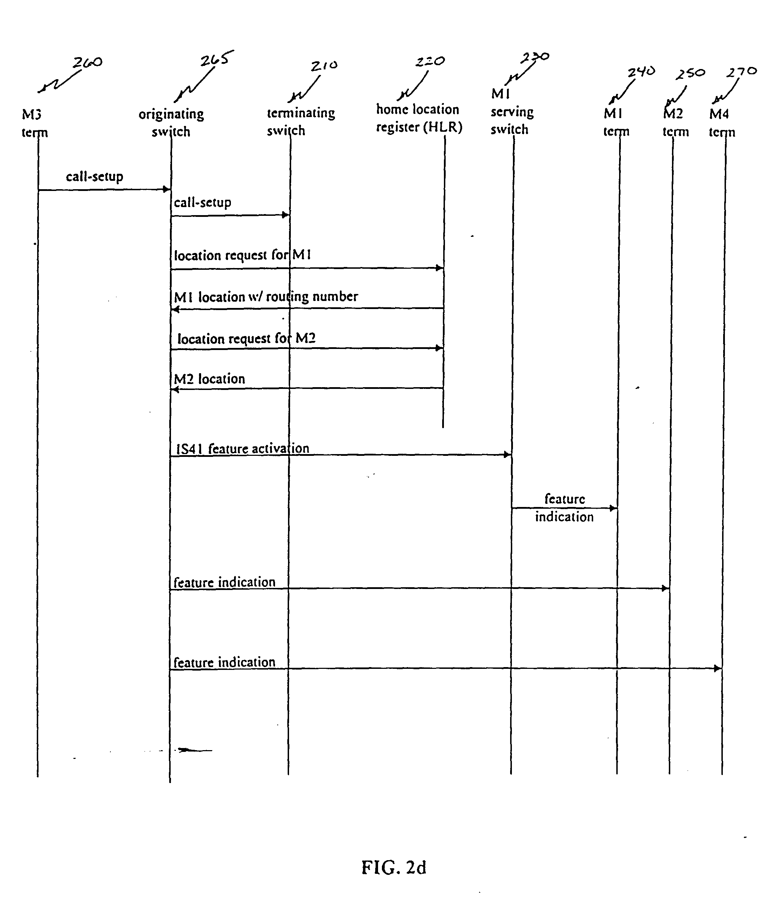

Fig. 2d illustrates a call flow diagram for originating a conference call from a group terminal consistent with the present invention. In this example, a conference call is originated by wireline M3 terminal 260; however, any member of the group can initiate a conference call. To initiate the conference call, M3 terminal 260 preferably goes off-hook and dials the number of a destination terminal. The telephone number is sent as a call-setup message to an originating switch 265, which is the switch currently servicing the group. Originating switch 265 sends the call-setup message to terminating switch 210 to connect with the dialed party. In addition, originating switch 265 sends a location request to HLR 220 for wireless M1 terminal 240. Once located, HLR 220 sends the location of M1 terminal 240 to originating switch 265 along with a routing number, since M1 terminal 240 is not serviced by originating switch 265. Similarly, originating switch 265 sends a location request to HLR 220 for wireless M2 terminal 250. HLR 220 locates wireless M2 terminal 250 and sends the location information to originating switch 265. Upon receiving the location information for wireless terminal M1, originating switch 265 sends an IS41 feature activation message to M1 serving switch 230. Subsequently, M1 terminal 240 receives a feature indication message from M1 serving switch 230 that provides a visual or audio indication of the existing conference call. Finally, originating switch 265 sends feature indication messages directly to wireless M2 terminal 250 and wireline M4 terminal 270. At this point, the wireless and wireline members of the group can choose to participate in the conference call by responding to the feature activation message as previously described herein with respect to Fig. 2c.

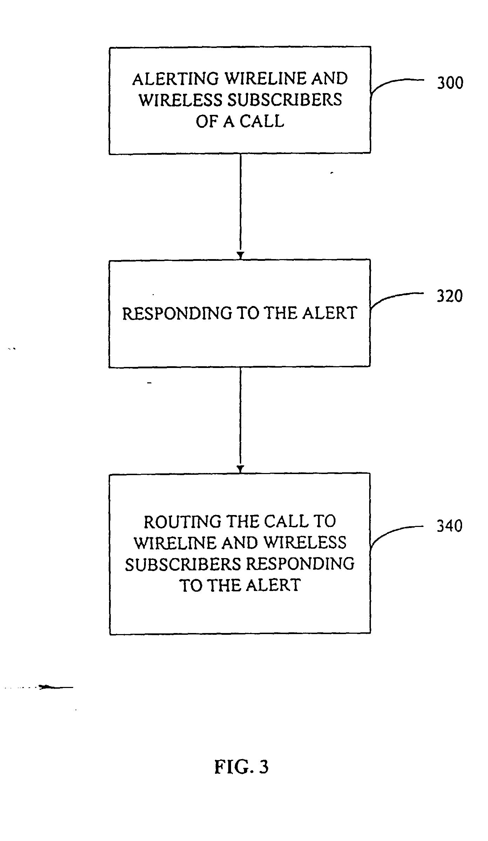

Fig. 3 shows a method for bridging wireless and wireline subscribers consistent with the present invention. Initially, system 100 alerts wireless subscribers 140 and wireline subscribers 150 associated with the group directory number of a call (step 300). Bridging software 176 can be configured to alert all of the group terminals simultaneously or one at a time in a specified order. The subscriber can avoid the alerting sequence at any time by entering a predetermined code into their communication device to disassociate themselves from the group directory number.

When one of the subscribers responds to the alert by answering the call, switching node 130 ceases alerting the other subscribers and the call becomes active for the group (step 320). The non-answering members of the group can send a conference request to switching node 130 (i.e., the terminating switch) by simply going off-hook (wireline group members) or entering a feature access code (wireless group members). Once the switching node 130 receives the conference request, processor 160 executes bridging software 176 to route the call to the subscriber (step 340). By routing the call, switching node 130 conferences the subscriber into the call. In addition, switching node 130 sends a notification alerting all existing conference members of the new participant in the call.

Embodiments consistent with the present invention allow multiple group wireless and wireline subscribers who share a directory number to participate in all calls made to and from a single directory number. Switching node 130 notifies each group of wireless and wireline subscribers of new or existing telephone calls and permits each subscriber to participate immediately in the conference call or at a later time. In addition, subscribers have the option of making the call private to exclude other members of the group from participating. Current systems simply do not allow multiple wireless and wireline subscribers to conference into an existing telephone call or provide other call conferencing services described herein.

While there has been illustrated and described preferred embodiments and methods of the present invention, those skilled in the art will understand that various changes and modifications may be made, and equivalents may be substituted for elements thereof, without departing from the true scope of the invention.

In addition, many modifications may be made to adapt a particular element, technique or implementation to the teachings of the present invention without departing from the central scope of the invention. Therefore, this invention should not be limited to the particular embodiments and methods disclosed herein, but should include all embodiments falling within the scope of the appended claims.

## Claims

1. A system for bridging wireline and wireless subscribers, comprising:
means for alerting a plurality of wireline and wireless subscribers of a call;
means for responding to the alert; and
means for routing the call to at least one of the plurality of wireline and wireless subscribers responding to the alert.

2. The system of claim 1 wherein the alerting means includes means for sending a signal to a communications device of one of the plurality of wireline and wireless subscribers.

3. The system of claim 2 wherein the sending means includes means for sending an audible and/or a visual signal to the communications device.

4. The system of claim 1 wherein the responding means includes means for inputting a predetermined command into the communications device.

5. The system of claim 1 wherein the routing means includes means for bridging the plurality of wireline and wireless subscribers through a switching device.

6. A system according to claim 1 further including a switching node for bridging wireline and wireless subscribers.

7. A switching node for bridging wireline and wireless subscribers, comprising: a processing device;
a memory accessible by the processing device;
a plurality of communications channels in communication with a plurality of wireline and wireless communication devices; and
executable software code stored in the memory and executed by the processing device for controlling call conferencing functionality between the plurality of wireline and wireless communication devices.

8. The node of claim 7 wherein the memory device includes an EEPROM.

9. A wireless communications device, comprising:
means for indicating the existence of a call;
means for entering a predetermined code;
means for transmitting a signal corresponding to the predetermined code to a remote device; and
means for receiving the call to establish a conference call network with a plurality of wireless and wireline communication devices.

10. A wireline communications device, comprising:
means for indicating the existence of a call;
means for responding to the indication; and
means for receiving the call to establish a conference call network with a plurality of wireless and wireline communication devices.

11. The device of claims 9 or 10 wherein the indicating means includes means for providing an audible signal.

12. A method for bridging wireline and wireless subscribers, comprising the steps of:
alerting a plurality of wireline and wireless subscribers of a call;
responding to the alert; and
routing the call to at least one of the plurality of wireline and wireless subscribers responding to the alert.

13. The method of claim 12 wherein the alerting step includes the step of sending a signal to a communications device of one of the plurality of wireline and wireless subscribers.

14. The method of claim 13 wherein the sending step includes the step of sending an audible and/or a visual signal to the communications device.

15. The method of claim 12 wherein the responding step includes the step of inputting a predetermined command into the communications device.

16. The method of claim 12 wherein the alerting step includes the step of dialing a telephone number associated with the plurality of wireline and wireless subscribers.

17. The method of claim 12 further including the step of notifying each of the plurality of wireline and wireless subscribers when a new subscriber selects to receive the call.

18. The method of claim 12 further including the step of dialing a code into a communications device to prohibit one of the plurality of wireless and wireline subscribers from receiving the call.
